# EUROPEAN PATENT SPECIFICATION

(11) **EP 0 895 591 B1**
(45) Date of publication and mention of the grant of the patent: **07.09.2005**
(21) Application number: 97950255.6
(22) Date of filing: 30.12.1997
(51) Int. Cl.: G01N 25/72, G01N 25/48, G01N 1/00

(54) **METHOD AND APPARATUS FOR PERFORMING CHEMICAL ANALYSIS USING IMAGING BY SCANNING THERMAL MICROSCOPY**
VERFAHREN UND VORRICHTUNG ZUR CHEMISCHEN ANALYSE MIT ABBILDUNG DURCH THERMISCHE RASTERMIKROSKOPIE
METHODE ET APPAREIL POUR L'ANALYSE CHIMIQUE UTILISANT UNE IMAGE OBTENUE PAR MICROSCOPIE THERMIQUE PAR BALAYAGE

(30) Priority: 31.12.1996 US 33959 P
(43) Date of publication of application: 10.02.1999
(73) Proprietor: Reading, Michael, London W13 9EZ (GB)
(72) Inventor: Reading, Michael, London W13 9EZ (GB)
(74) Representative: Barnard, Eric Edward
(86) International application number: PCT/GB1997/003456
(87) International publication number: WO 1998/029737

(56) References cited:
- EP-A- 0 135 375
- EP-A- 0 371 572
- WO-A-97/40369
- US-A- 5 248 199
- US-A- 5 441 343
- MAMIN H J: "THERMAL WRITING USING A HEATED ATOMIC FORCE MICROSCOPE TIP" APPLIED PHYSICS LETTERS, vol. 69, no. 3, 15 July 1996, pages 433-435, XP000626028
- "LASER DESORPTION TRANSFER SAMPLING" IBM TECHNICAL DISCLOSURE BULLETIN, vol. 36, no. 5, 1 May 1993, page 87/88 XP000408920

## Description

The present application is a continuation-in-part of U.S. Patent Application No. 08/837,547 (the "Parent Application"), filed April 22, 1997. The present application also claims the benefit of U.S. Provisional Application No. 60/033,959 (the "Provisional Application"), filed December 31, 1996.

### BACKGROUND

### Field of the Invention

The present invention relates to analyzing the chemical nature of materials. More particularly, the present invention relates to sub-micron analysis of chemical properties of a sample material at a particular location of interest by decomposing, desorbing or ablating a small portion of the sample material and transferring the small portion to a chemical analyzer.

### Background of the Invention.

A conventional method for imaging the chemical nature of polymeric systems is imaging Secondary Ion Mass Spectroscopy (SIMS). In imaging SIMS, the surface of a sample is bombarded by a beam of ions (usually argon) that is rastered over the surface. The ions cause material on the surface of the sample to be ejected and ionized. These secondary ions are swept into a mass spectrometer for analysis. SIMS is a very expensive technique that is not easily applicable to insulating samples such as polymers. This is because a charge that builds on the surface of insulating polymer samples deflects the incident ion beam. Although this can be overcome in some cases by bathing the insulating polymer sample with electrons, a great deal of expertise is required to obtain satisfactory results. A further limitation of SIMS is that the sample must be analyzed under high vacuum. It would be desirable in many cases to analyze samples at or above atmospheric pressure or submerged in a substance, for example water.

Another problem with SIMS is that is a continuously destructive imaging technique. As described above, the bombardment of the material by the ion beam causes the surface material to be ejected, thereby destroying the surface. It would be advantageous to have an imaging system which can image the topology and thermal properties of the material without destroying the surface. It is also desirable to be able to study the material after any damage is done as a result of desorption or pyrolysis. Neither kind of study can be performed using conventional SIMS techniques.

### SUMMARY OF THE INVENTION

The present invention allows chemical studies to be performed on the surface and sub-surface of a material. An image of a sample material is created using any conventional sample imaging technique. Using the image, an area of the sample on which to perform analysis is determined. An activation device is positioned at the selected area of interest. The activation device is activated to cause a portion of the sample to be emitted. The emitted portion of the sample is collected and analyzed to determine its chemical properties. The present invention can be used below, at or above atmospheric pressure or submerged in a substance, for example, water.

In a preferred embodiment of the present invention, the activation device is a highly miniaturized resistive probe as described below. According to the invention, an image of the sample is created using the probe. Using the resulting image, the probe is positioned at a desired location on the surface. Using a selected heating mode, the probe is heated to cause a portion of the sample to decompose or desorb into a gaseous form. The evolved gas is swept into a heated capillary tube, which is positioned close to the probe. The heated capillary tube is connected to a chemical analyzer, which analyzes the evolved gases. The area from which the material was decomposed or desorbed can further be rescanned to assess the volume ablated. The process is then repeated for another selected area.

The process can be placed under computer control. Using a computer the selected area can be scanned. Further, either an operator or the computer can select areas for analysis.

### Objects of the Invention

A first object of the present invention is to provide sub-micron imaging and chemical analysis over a wide-variety of atmospheric pressures, including at or above atmospheric pressure, under a vacuum, and submerged under a substance, for example, water.

Another object of the present invention is to image a sample topology and thermal properties in a non-destructive manner, in addition to obtaining information using pyrolysis and desorption.

Another object of the present invention is to reduce the problems associated with imaging insulators such as polymers.

Another object of the present invention is to provide precise temperature control to increase the resolution of chemical species analysis.

Another object of the present invention is to reduce the cost of conventional sub-micron imaging.

These and other objects of the present invention are described in greater detail in the detailed description of the invention, the appended drawings and the attached claims.

### DESCRIPTION OF THE DRAWINGS

Figure 1 is a schematic diagram of a sub-micron chemical analysis system according to a preferred embodiment of the present invention.
Figure 2 is a flow chart for analyzing a sample according to a preferred embodiment of the present invention.

### DETAILED DESCRIPTION OF THE INVENTION

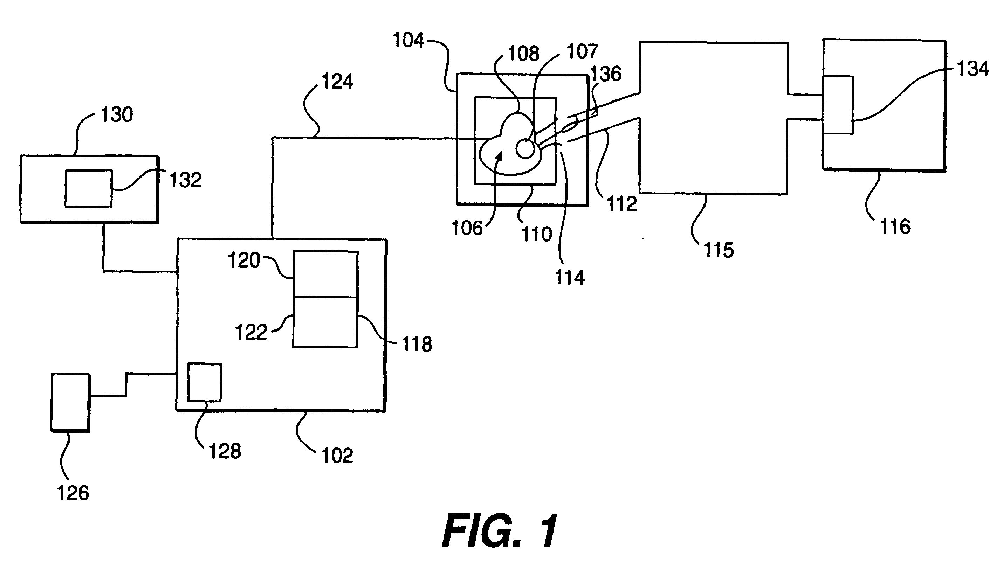

A preferred embodiment of the present invention is illustrated schematically in Figure 1. In the preferred embodiment, a computer 102 is operatively coupled to a scanning thermal microscope (STM) system 104. STM 104 includes a probe 106, which is used to analyze local thermal properties at a location 107 of a sample 108, placed on a stage 110 of STM 104. According to the preferred embodiment, a heated capillary tube 112 is placed in close proximity to location 107 to collect evolved gases 114 that result from heating location 107 according to the present invention. In the preferred embodiment, evolved gases 114 are analyzed for their chemical composition by a gas chromatograph 115 and/or a mass spectrometer 116.

STM 104 is preferably the Explorer scanning probe microscope (SPM) manufactured by the Topometrix Corporation, located in Santa Clara, California. Probe 106 is preferably a thermal resistive element that functions as both a heater and a sensor. Alternately, probe 106 is heated by a laser and the temperature sensed by a thermocouple. When operating as a heater a current proportional to the desired temperature is passed through probe 106. When operating as a sensor, the resistance of probe 106 varies in response to changes in temperature. A more detailed description of STM 104 and probe 106 is presented in the Parent Application, which has been incorporated by reference herein in its entirety.

Probe 106 can be used as a highly localized heat source as well as a detector. When heated by the passage of an electric current through the resistive portion of probe 106, its contact with the sample acts as a point-like heat source. Therefore, no other means of sample heating, such as a laser, is required. The probe 106 is attached to a scanning mechanism, and is controlled to obtain thermal image contrast that corresponds to variations in either thermal conductivity (using DC imaging) or thermal diffusivity (using AC imaging).

In the preferred embodiment, computer 102 controls the position and the temperature of probe 106, by executing a probe control process 118. Thus, the scanning mechanism in the preferred embodiment is computer 102. Computer 102 executes a probe position process 120. Probe position process 120 sends commands to STM 104 to control the position of probe 106. This position control can simply be a command to probe 106 to move to a particular location, for example location 107. In addition, the position control can be complex so as to effectuate a scan or raster of a particular area of interest. Programming computer 102 to perform the functions described herein for probe position process 120 is well-know to those skilled in the art.

Computer 102 also executes a heating program process 122, which sends probe control commands to probe 106 to cause it to heat according to a selected or calculated temperature program. The temperature program can be selected or chosen in a number of well-known ways. For example, the temperature program can be selected by choosing the exact parameters that describe the temperature program. Alternately, the temperature program can be entered by parameters that are then used to calculate the desired temperature program. Programming computer 102 to perform the functions described herein performed by heating control process 122 is well-known to those skilled in the art.

Several methods for causing probe 106 to generate the desired temperature program can be used with the present invention. In the preferred embodiment, computer 102 sends probe control commands to STM 104 in a well-known manner over an interface 118. STM 104 receives the probe control commands and causes a current to flow through probe 106 to generate the requested temperature program.

According to the preferred embodiment of the present invention, a particular location, for example location 107, on sample 108 at which to perform a localized thermal analysis is selected by first obtaining a thermal and/or topographic image of the sample. The thermal and/or topographic image can be obtained by any of the techniques disclosed in the Parent Application, or any other technique. Using the thermal and/or topographic image, the particular location is selected.

In the preferred embodiment, selection is performed using a pointing device 126. For example, pointing device 126 can be a conventional mouse device controlled by mouse control software 128 executing on computer 102. Preferably, the thermal and/or topographic image is generated on a display device 130. Referring to Figure 1, a thermal image 132 of sample 108 is illustrated on display device 130. Display device 130 can be any of a number of well-known cathode ray tube (CRT) devices that can be coupled to computer 102. Once the area is selected, probe position process 120, executing on computer 102, converts the selected location to probe position control commands. Probe position process 120 sends the probe position control commands to STM 104 to cause probe 106 to be positioned at location 107. Probe 106 is preferably placed approximately a micron above the surface of sample 108 at location 107.

Once probe 106 is located at the position 107, probe position process 120 places probe 106 on the surface of sample 108. Preferably, this is accomplished by placing the probe in contact with the surface of sample 108 at location 107 and applying a known force to probe 106 to maintain contact with the surface of sample 108. Sample 108 is then heated by heating probe 106. Preferably, sample 108 is heated by applying one of the heating modes described below to probe 106. Alternately, probe 106 can be placed at a known distance above the surface of sample 108. Sample 108 would then be heated, preferably by applying one of the heating modes described below to probe 106.

When probe 106 is properly positioned at location 107, a heating mode is selected to cause probe 106 to heat sample 108 at location 107. The heating modes are selectable or can be pre-selected, as by choosing one mode to be a default mode. There are several heating modes available in the preferred embodiment:
a) Temperature Ramp Mode: Probe 106 is placed on the area of interest and its temperature ramped. Adsorbed material is driven off at low temperatures. Then decomposition products are generated at higher temperatures.
b) Heat Pulse mode: Probe 106 is heated to some temperature above the normal decomposition or desorption temperature for sample 108. Probe 106 is then briefly placed on the surface of sample 108. Desorption and decomposition products are generated. The amount of time that probe 106 remains in contact with the surface of sample 108 can be used to regulate the size of the region over which decomposition/desorption occurs. The heat pulse mode is alternately referred to as a tapping mode. That is the hot probe 106 is tapped on the surface of sample 108 to heat it.
c) Transfer Mode: Probe 106 is cleaned by heating to a high temperature. Then probe 106 is allowed to cool. Probe 106 is then placed on the surface of sample 108 and raised. Material from the surface of sample 108 is adsorbed onto the probe. The adsorbed material can then be desorbed by flash heating. The process can be repeated as required to obtain sufficient material for analysis. Because repetition may be required, this process is preferably automated. That is computer 102 controls the process of cleaning, cooling, lowering, raising and flash heating of probe 106.
   An alternative technique for using the transfer mode is to coat the tip of probe 106 with a material that assists the adhesion of the surface material to probe 106. For example, probe 106 can be dipped in the requisite fluid. Any adhesion promoting or reactive fluid can be used. A reactive fluid chemically reacts with the surface of sample 108 to promote adhesion products. To assist drying, probe 106 is preferably warmed. Probe 106 is then placed on the surface of sample 108. Surface material can adhere to the coating. Alternately, probe 106 can be warmed to assist the adhesion process. Probe 106 can then be cooled and raised. Then the adhesion products can be desorbed through flash heating. During chemical analysis, the decomposition products of the coating would be known, and therefore can be eliminated from the analysis. Alternately, the raised probe 106 can be moved to a different location where it is dipped into a transfer medium. The transfer medium dissolves the sample into a small dot of the new material. This product is then analyzed by any analytical technique, including conventional HPLC and electrophoresis. Using a coating that is not water-soluble, the transfer mode can be applied to a sample that is under water. Materials submerged in substance other than water can be studied by using a solvent-insoluble coating, or any coating not soluble by the substance in which the material is submerged. The particular coating that is used in the transfer mode can contain reactive species to obtain specific products.
d) Ballistic Mode: Probe 106 is heated to a commanded temperature very rapidly. The heating is uncontrolled, meaning that the temperature of the probe reaches the commanded temperature as rapidly as it can.
e) Scanning Mode: An area of the surface of sample 108 is selected for analysis, rather than a single point. Probe 106 is heated. The heated probe 106 is then rastered over the selected area of the surface of sample 108. Material that is ablated from sample 108 is trapped and analyzed. The temperature of probe 106 and the speed of the raster are both controllable using computer 102 and probe control process 118. The temperature of probe 106 and the speed of the raster determine the depth of the material that is ablated. For example, an area of 10 by 10 microns can be scanned with ablation occurring to 100 nanometers. This results in 10 cubic microns of ablated material. Preferably, the scanning mode is automatically controlled by computer 102. The scanning mode can also be combined with any heating mode (a) - (d) to heat probe 106.

The present invention is not limited to the above heating modes. Other modes of heating to obtain the benefits of the present invention would be known to those skilled in the art. Further, in the preferred embodiment, it is the tip of probe 106 that is heated.

In each of the heating modes, material is decomposed, desorbed or ablated for subsequent chemical analysis. Two methods of chemical analysis are used in the preferred embodiment: mass spectroscopy and gas chromatography. Both methods are well-known to those skilled in the art. There is a problem, however, associated with transferring the material to the analyzer, whether it is mass spectrometer 116 and/or gas chromatograph 115. In the preferred embodiment, this problem is solved by using a heated capillary 112. The heated capillary 112 is positioned in close proximity to probe 116, so that desorbed, decomposed or ablated species are "sucked" into capillary tube as a result of a low pressure maintained on the other side. For example, the low pressure can be generated by connecting the other end of the capillary to the vacuum chamber 134 of the mass spectrometer 116. Once the evolved material 114 has entered mass spectrometer 116, its chemical properties are analyzed in a conventional manner. In this manner, the present invention allows sub-micron study of the chemical properties of materials. Using the scanning method of heating described above, the present invention allows sub-micron chemical imaging of a sample.

The heating modes described above provide a high degree of control of the surface selectivity. The transfer mode provides information very near the surface, including the top monolayer in many cases. The temperature scanning and heat pulse modes can sample tens, and even hundreds, of microns below the surface. If an isolated particle is the object of interest, whether lying on, or buried below within a matrix with one side exposed, then the entire particle can be volatilized to ensure a good analysis with high signal to noise ratio.

As described above, the scanning mode can be combined with any of the other modes as probe 106 is rastered along the selected analysis area in two dimensions. For example, by combining the heat pulse mode and the scanning mode, probe 106 is effectively tapped on the surface of material 108 as it is rastered in two dimensions. The resulting series of gases can be analyzed by mass spectrometer 116, thus building up a chemical map of the surface of sample 108. That is, acquisition of gases is coordinated with the position in the image that is being generated.

To provide additional information a gas chromatograph 115 is added to the sub-micron chemical analysis system of the present invention. In the preferred embodiment, gas chromatograph 115 is interposed between heated capillary 112 and mass spectrometer 116, as illustrated schematically in Figure 1. In this manner, the evolved material can be chemically analyzed by gas chromatography using gas chromatograph 115.

Using computer 102, the foregoing analyses can be automated. Preferably, areas of interest for analysis are pre-selected. This can be done by preselecting multiple areas on using a thermal image, such as thermal image 132. Alternately, computer 102 can select the areas of interest, for example, by using a random number generator. In addition, the heating mode is selected. This can be done by selecting the heating program. Alternately, computer 102 can select the heating mode. For example, heating control process 122, executing on computer 102, can select a default heating mode. After the selection is made, probe position process 120 causes the probe to automatically go to the first selected area. Heating mode process 122 sends appropriate probe control commands to STM 104 to cause probe 106 to heat the selected area according to the selected heating mode. The evolved gases are transferred into the analyzer through capillary 112, where their chemical nature is analyzed. After the analysis, probe position process 120 automatically causes probe 106 to move to the second pre-selected area, and the process repeats. This is done for all selected areas designated in the automatic analysis. In the automatic mode of operation different heating programs can be selected for different areas of the sample 108. For example, the first selected area can be heated according to the temperature ramp mode, while a second area can be analyzed using a scanning mode.

In some cases, it is desirable to trap the evolved gases 114 into a cryo-trap or an adsorbate (not shown). Subsequently, the material is flash desorbed and forwarded to the gas chromatograph and/or mass spectrometer for analysis.

Capillary tube 112 can be placed close to the sample by "eyeballing" the appropriate location. However, other techniques can place capillary tube 112 more accurately. In the preferred embodiment, a hunt-seek type proximity determination method is used to locate heated capillary tube 112 next to the tip of probe 106. One hunt-seek method, for example, is to use an automated micro-positioner, such as is conventionally used in optical microscopy. In this method, probe 106 and heated capillary tube 112 are made to form two halves of a capacitor. Heated capillary tube 112 is initially located by eye. Then a capacitance signal generated by the two halves is used to bring capillary tube 112 closer to probe 106, but not to close.

To prevent, capillary tube 106 from being moved too dose to probe 106, a threshold for the capacitance signal can be used. If the capacitance signal exceeds the threshold, capillary tube 112 is too close to probe 106. A second threshold can be used to determine whether capillary tube 112 is dose enough to probe 106. That is, if the capacitance signal is below the second threshold, then capillary tube 112 must be moved closer to probe 106. Thus, in effect a range is determined for the capacitance signal. When the capacitance signal falls within that range, capillary tube 112 is properly positioned relative to probe 106.

An alternative hunt-seek method for properly positioning capillary tube 112 relative to probe 106 is to embed a temperature sensor 136 in capillary tube 112. As before a threshold range is determined. In this case the thresholds correspond to temperatures. If the temperature sensed by temperature sensor 136 is too great, capillary tube 112 is too close to probe 106. If the temperature sensed by temperature sensor 136 is too small, capillary tube 112 is too far from probe 106.

Another alternative for properly positioning capillary tube 112 relative to probe 106 is to calibrate the micro-manipulator of STM 104 and probe 106 in the x, y and z planes. By so doing, probe 106 can be precisely positioned without the need for a feedback loop based on some form of proximity determination. By calibrating the micro-manipulator and probe 106 in this manner, probe 106 can be precisely positioned. As a result, capillary tube 112 can be precisely positioned relative to probe 106's known position.

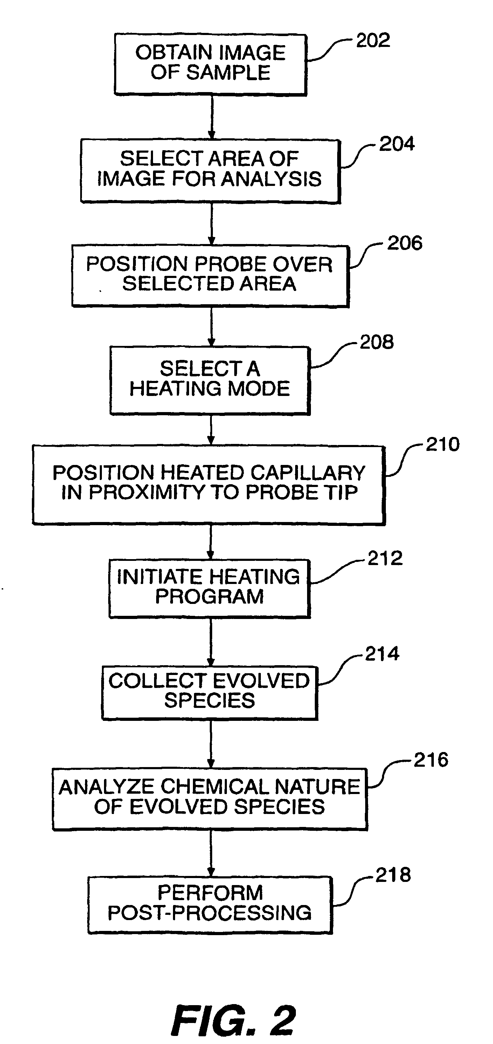

A preferred method for performing a process according to the present invention using the apparatus discussed above and illustrated in Figure 1 is shown by a flow chart in Figure 2. In step 202 an image of a sample is obtained. As described above, this image can be obtained using any imaging technique, including thermal and photothermal imaging techniques. In step 204 an area of the image is selected for analysis. This selection can be by a user or performed automatically, for example, by computer 102. In step 206, probe 106 is positioned over the selected area. In the preferred embodiment, this is done by probe position process 120, and can use the proximity determination hunt-seek or calibration methods described above. A heating mode is then selected in step 208. Once again, the selection can be by a user or automatic, for example, by computer 102 using a default In step 210 heated capillary tube 112 is positioned in proximity to probe 106 to collect material that evolves from sample 108 upon heating. The heating mode is initiated in step 212. In the preferred embodiment, the heating mode is controlled by heating control process 122 executing on computer 102. The material that evolves is collected in step 214. The collected material is analyzed in a chemical analyzer in step 216. In the preferred embodiment, the chemical analysis is performed by gas chromatograph 115 and/or mass spectrometer 116. In step 218, any desired post-processing is performed. For example, the sample 108 from which material evolved can be analyzed to assess the volume ablated, or to image the resulting crater. Steps 202-218 can be repeated at another location if desired.

The foregoing disclosure of examples and embodiments of the present invention has been presented for purposes of illustration and description. It is not intended to be exhaustive or to limit the invention to the precise forms disclosed. Many variations and modifications of the embodiments described herein will be obvious to one of ordinary skill in the art in light of the above disclosure. The scope of the invention is to be defined only by the claims appended hereto, and by their equivalents.

## Claims

1. A system for sub-micron chemical imaging of a sample, said system comprising:
a computer (102);
a scanning thermal microscope (104) coupled to said computer and having a sample stage (110) for receiving a sample (108) thereon;
a probe (106) usable to heat said sample;
a probe control process (118) executable on said computer to cause said probe to heat an area of said sample according to a heating mode;
a chemical analyzer (115, 116);
a capillary tube (112) positioned in proximity to a tip of said probe to collect gases that evolve as a result of said probe heating said sample; and
means for obtaining and displaying an image (202) of the sample (108), the probe control process (118) being arranged to control the position of the probe (106) with respect to the sample (108) such that the tip of the probe may be placed in contact with a position on the sample corresponding to a specific point on the image of the sample.

2. A system according to claim 1, wherein said probe control process comprises:
a probe position control process (120) to position said probe (106) in proximity to said capillary tube (112) and/or the sample (108) and
a heating control process (122) to control heating of said probe.

3. A system according to claim 2, wherein said probe position control process utilizes a first threshold for determining when said probe is too far from said capillary tube and a second threshold for determining when said probe is too close to said capillary tube.

4. A system according to claim 3, wherein said first and second thresholds comprise capacitance values or temperature values.

5. A system according to claim 2, and further comprising means for precisely positioning the capillary tube (112) relative to the probe (106).

6. A system according to claim 5, wherein the means for precisely positioning the capillary tube (112) relative to the probe (106) comprises means for generating a capacitance signal representative of the position of the capillary tube relative to the probe.

7. A system according to claim 5, wherein the means for precisely positioning the capillary tube relative to the probe comprises a temperature sensor (136) embedded in the capillary tube and the relative position of the capillary tube to the probe is estimated based upon the temperature measured by the embedded temperature sensor.

8. A system according to claim 2, wherein said probe position process utilizes a calibration process for calibrating said probe (106) in x, y and z planes so that said probe can be placed at an accurately determined location.

9. A system according to any one of claims 1 to 8, wherein the chemical analyzer comprises a gas chromatograph (115) and a mass spectrometer (116) the gas chromatograph (115) being disposed between said capillary tube (112) and said mass spectrometer (116).

10. A system according to any one of claims 1 to 8, wherein the chemical analyzer at least includes a mass spectrometer (116) or a gas chromatograph (115).

11. A system according to any one of claims 1 to 10, wherein said capillary tube (112) is heated.

12. A system according to any one of claims 1 to 11, wherein said probe (106) is a thermal resistive probe.

13. A system according to claim 1, wherein the probe (106) is part of the scanning thermal microscope (104) and the probe has a resistive tip;
the probe control process executed on the computer (102) controls the position of the probe and the temperature of the resistive tip and the system further comprises
means for selecting an area of a surface of the sample (108) to be analyzed;
means for positioning the probe (106) over the selected area of the surface of the sample;
means for placing the probe (106) in contact with the surface of the sample and
means for heating the resistive tip of the probe (106) according to a temperature program selected to cause gases to evolve from the surface of the sample.

14. A system according to claim 13, wherein the chemical analyzer is in fluid connection with the capillary tube for analyzing the chemical composition of the evolved gases.

15. A system according to any one of claims 1 to 14, wherein the probe control process or the probe position control process executed on the computer (102) serves to scan the probe (106) over the surface of the sample, and places of the probe in contact with the surface of the sample according to a programmed raster pattern.

16. A system according to claim 15 and further comprising means for keeping the probe (106) in contact with the sample (108) by applying a known force to the probe (106).

17. A system according to any one of claims 1 to 15, wherein the probe control process or the probe position control process controls the temperature of the probe tip to a temperature above the desorption temperature of the sample and/or to a temperature above the decomposition temperature of the sample.

18. A system according to claim 17, wherein the temperature of the probe (106) is controlled according to a program so that prior to the probe being brought into contact with the sample, the temperature of the probe (106) is increased to a temperature sufficiently high to clean the probe;
when the probe (106) is in contact with the sample (108), the sample is maintained at a temperature such that material from the surface of the sample is adsorbed onto the probe; and after the probe is no longer in contact with the sample, the temperature of the probe is increased such that the material from the surface of the sample is desorbed from the probe whereby the capillary tube (112) collects material that is desorbed from the probe.

19. A system according to claim 18 and further comprising a material applied as a coating to the probe for assisting in the adhesion of the material from the sample surface thereto.

20. A system according to any one of the preceding claims and further comprising a pointing device (126) for identifying the specific point on the image of the sample.

21. A system according to claim 20 wherein the image (202) is a thermal image or a topographic image.

22. A method of chemically imaging a sample, comprising the steps of:
(a) obtaining an image (202) of a sample (108);
(b) selecting an area (204) of said image for analysis;
(c) positioning (206) a probe (106) over said area selected in step (b);
(d) selecting a heating mode (208) of said probe;
(e) positioning (210) a capillary tube (112) in proximity to a tip of said probe;
(f) initiating (212) said heating mode;
(g) collecting material (214) that evolves from said sample in response to said heating mode initiated in step (f); and
(h) analyzing (216) the chemical nature of said material that evolved in step (g).

23. A method according to claim 22 and further comprising the step of (i) performing post processing (218) on said area selected in step (b).

24. A method according to claim 22 or 23, wherein step (a) comprises obtaining a thermal image of the sample or a topographic image of the sample.

25. A method according to any one of claims 22, 23 or 24, wherein step (c) comprises placing the probe in contact with the selected area of the sample and applying a known force to maintain contact with the surface of the sample.

26. A method according to any one of claims 22 to 25, wherein step (e) comprises generating a capacitance signal between the probe and the capillary tube, and using the capacitance signal to bring the capillary tube close to the probe.

27. A method according to claim 22, wherein the image is an image of a surface of the sample obtained by using a scanning thermal microscope (104) having the probe (106) which is a thermal probe and the method further comprises
selecting a location on the image for chemical analysis;
calculating a set of probe position control commands from the selected location;
positioning the thermal probe slightly above the surface of the sample at the selected location, using the probe position control commands;
heating the probe according to said selected heating mode, wherein the heading modes available for selection comprise a temperature ramp mode, a heat pulse mode and a transfer mode;
driving gases off the surface of the sample;
capturing the gases in the capillary tube and
analyzing the gases in a chemical analyzer.

28. A method according to claim 27 and repeating the steps to analyze the chemical composition of the surface of the sample as a function of depth.

29. A method according to claim 27 or 28 and further comprising
trapping the gases in a cryo-trap;
heating the cryo-trap to release the gases from the cryo-trap; and then analyzing the released gases in the chemical analyzer.

30. A method according to claim 27 or 28 and further comprising
trapping the gases in an adsorbate;
flash heating the adsorbate to desorb the gases and
analyzing the desorbed gases in the chemical analyzer.

31. A method according to any one of claims 27 to 30, wherein the thermal probe is positioned to be at a predetermined distance, preferably approximately one micron, above the sample.

32. A method according to any one of claims 27 to 31, wherein the chemical analyzer is or includes a gas chromatograph (115).

33. A method according to claim 32, wherein the gases are further analyzed in a mass spectrometer (116) after the gases have been analyzed in the gas chromatograph (115).

34. A method according to any one of claims 27 to 33, wherein the selected heating mode is a ramp mode, and adsorbed material is driven off.

35. A method according to any one of claims to 27 to 34, wherein the selected heading mode is the heat pulse mode and the probe is tapped on to the surface of the sample.

36. A method according to claim 35, wherein the tapping of the probe on the surface of the sample is according to a raster pattern.

37. A method according to any one of claims 33 to 36 and further comprising generating gases by decomposing the surface of the sample under the probe.

38. A method according to any one of claims 22 to 37 and further comprising cleaning the probe (106) by flash heating and allowing the probe to cool down before positioning the probe.

39. A method according to claim 38 when appended to claim 25 and further comprising dipping the tip of the probe (106) into an adhesive after the probe has been cleaned and before positioning or placing of the probe such that when the probe is placed on the sample, surface material adheres to the adhesive.

40. A method according to claim 22 and further comprising
dipping the probe (106) into an adhesive;
placing the probe (106) in contact with the surface of the sample (108), such that surface material adheres to the adhesive on the probe;
raising the probe and moving the probe to a different location;
dipping the probe into a transfer medium;
dissolving the surface material into a small dot.

41. A method according to claim 40, wherein the transfer medium contains a reactive species that reacts with the surface material to form a reactive product.

## Patentansprüche

1. Ein System zur chemischen Bildgebung einer Probe im Submicron-Bereich, wobei das System umfasst:
einen Computer (102);
ein thermisches Rastermikroskop (104), welches an den genannten Computer angeschlossen ist und einen Objekttisch (110) zum Aufnehmen
einer Probe (108) auf diesem aufweist;
eine Sonde (106), welche verwendbar ist, um die genannte Probe zu erhitzen;
ein Sondensteuerverfahren (118), welches auf dem genannten Computer ausführbar ist, um zu verursachen, dass die genannte Sonde einen Bereich der genannten Probe gemäß einem Heizmodus erhitzt;
einen chemischen Analysator (115, 116);
ein Kapillarröhrchen (112), welches in der Nähe zu einer Spitze der genannten Sonde positioniert ist, um Gase einzusammeln, welche als ein Ergebnis davon, dass die genannte Sonde die genannte Probe erhitzt, entweichen; und
ein Mittel zum Erzielen und Darstellen eines Bildes (202) der Probe (108), wobei das Sondensteuerungsverfahren (118) derart eingerichtet ist, dass es die Position der Sonde (106) mit Bezug auf die Probe (108) steuert, so dass die Spitze der Sonde in einen Kontakt mit einer Position auf der Probe positioniert werden kann, welche einem spezifischen Punkt auf dem Bild der Probe entspricht.

2. Ein System gemäß Anspruch 1, wobei das genannte Sondensteuerungsverfahren umfasst:
ein Sondenpositionssteuerungsverfahren (120), um die genannte Sonde (106) in der Nähe des genannten Kapillarröhrchens (112) und/oder der Probe (108) zu positionieren, und
ein Heizsteuerungsverfahren (122), um das Erhitzen der genannten Sonde zu steuern.

3. Ein System gemäß Anspruch 2, wobei das genannte Sondenpositionssteuerungsverfahren einen ersten Grenzwert zum Bestimmen, wann die genannte Sonde zu weit entfernt von dem genannten Kapillarröhrchen ist, verwendet, und einen zweiten Grenzwert zum Bestimmen, wann die genannte Sonde zu dicht zu dem genannten Kapillarröhrchen ist.

4. Ein System gemäß Anspruch 3, wobei die genannten ersten und zweiten Grenzwerte Kapazitätswerte oder Temperaturwerte umfassen.

5. Ein System gemäß Anspruch 2, ferner umfassend ein Mittel zum exakten Positionieren des Kapillaröhrchens (112) relativ zu der Sonde (106).

6. Ein System gemäß Anspruch 5, wobei das Mittel zum exakten Positionieren des Kapillarröhrchens (112) relativ zu der Sonde (106) ein Mittel zum Erzeugen eines Kapazitätssignals umfasst, welches repräsentativ für die Position des Kapillarröhrchens relativ zu der Sonde ist.

7. Ein System gemäß Anspruch 5, wobei das Mittel zum exakten Positionieren des Kapillaröhrchens relativ zu der Sonde einen Temperatursensor (136) umfasst, der in dem Kapillarröhrchen eingebettet ist, und die relative Position des Kapillarröhrchens zu der Sonde basierend auf der Temperatur, welche durch den eingebetteten Temperatursensor gemessen wird, ermittelt wird.

8. Ein System gemäß Anspruch 2, wobei das genannte Sondenpositionsverfahren ein Kalibrierungsverfahren zum Kalibrieren der genannten Sonde (106) in x-, y- und z-Ebenen verwendet, so dass die genannte Sonde in einer genau bestimmten Position positioniert werden kann.

9. Ein System gemäß einem der Ansprüche 1 bis 8, wobei der chemische Analysator einen Gaschromatographen (115) und ein Massenspektrometer (116) umfasst, wobei der Gaschromatograph (115) zwischen dem genannten Kapillarröhrchen (112) und dem genannten Massenspektrometer (116) angeordnet ist.

10. Ein System gemäß einem der Ansprüche 1 bis 8, wobei der chemische Analysator wenigstens einen Massenspektrometer (116) oder einen Gaschromatographen (115) umfasst.

11. Ein System gemäß einem der Ansprüche 1 bis 10, wobei das genannte Kapillarröhrchen (112) geheizt wird.

12. Ein System gemäß einem der Ansprüche 1 bis 11, wobei die genannte Sonde (106) eine thermische Widerstandssonde ist.

13. Ein System gemäß Anspruch 1, wobei die Sonde (106) Teil des thermischen Rastermikroskops (104) ist, und die Sonde eine Widerstandsspitze aufweist;
das Sondensteuerungsverfahren, welches auf dem Computer (102) ausgeführt wird, steuert die Position der Sonde und die Temperatur der Widerstandsspitze, und das System umfasst ferner:
ein Mittel zum Auswählen eines Bereichs einer Fläche der Probe (108), welcher analysiert werden soll;
ein Mittel zum Positionieren der Sonde (106) über dem ausgewählten Bereich der Fläche der Probe;
ein Mittel zum Positionieren der Sonde (106) in Kontakt mit der Oberfläche der Probe und
ein Mittel zum Heizen der Widerstandsspitze der Sonde (106) gemäß einem ausgewählten Temperaturprogramm, um zu verursachen, dass Gase aus der Oberfläche der Probe entweichen.

14. Ein System gemäß Anspruch 13, wobei der chemische Analysator in einer Fluidverbindung mit dem Kapillarröhrchen steht, zum Analysieren der chemischen Zusammensetzung der entwichenen Gase.

15. Ein System gemäß einem der Ansprüche 1 bis 14, wobei das Sondensteuerungsverfahren oder das Sondenpositionssteuerungsverfahren, welches auf dem Computer (102) ausgeführt wird, dazu dient, die Sonde (106) abtastend über die Oberfläche der Probe zu bewegen, und die Sonde in Kontakt mit der Oberfläche der Probe gemäß einem programmierten Abtastungsmuster positioniert.

16. Ein System gemäß Anspruch 15 und ferner umfassend ein Mittel zum Halten der Sonde (106) in Kontakt mit der Probe (108), durch Aufbringen einer bekannten Kraft auf die Sonde (106).

17. Ein System gemäß einem der Ansprüche 1 bis 15, wobei das Sondensteuerungsverfahren oder das Sondenpositionssteuerungsverfahren die Temperatur der Sondenspitze auf eine Temperatur oberhalb der Austreibungstemperatur der Probe und/oder auf eine Temperatur oberhalb der Dekompositionstemperatur der Probe regelt.

18. Ein System gemäß Anspruch 17, wobei die Temperatur der Sonde (106) gemäß einem Programm geregelt wird, so dass bevor die Sonde in einen Kontakt mit der Probe gebracht wird, die Temperatur der Sonde (106) auf eine Temperatur vergrößert worden ist, die ausreichend groß ist, um die Sonde zu reinigen;
wenn die Sonde (106) in einem Kontakt mit der Probe (108) steht, wird die Probe auf einer Temperatur gehalten, so dass Material von der Oberfläche der Probe auf die Sonde adsorbiert wird; und nachdem die Sonde nicht länger im Kontakt mit der Probe steht, wird die Temperatur der Sonde vergrößert, so dass das Material von der Oberfläche der Probe von der Sonde desorbiert wird, wobei das Kapillarröhrchen (112) das Material aufsammelt, welches von der Sonde desorbiert wird.

19. Ein System gemäß Anspruch 18 und ferner umfassend ein Material, welches als eine Beschichtung auf die Sonde aufgebracht ist, zum Unterstützen bei der Adhäsion des Materials von der Probenoberfläche darauf.

20. Ein System gemäß einem der vorhergehenden Ansprüche und ferner umfassend eine Zeigevorrichtung (126) zum Identifizieren des spezifischen Punktes auf dem Bild der Probe.

21. Ein System gemäß Anspruch 20, wobei das Bild (202) ein thermisches Bild oder ein topographisches Bild ist.

22. Ein Verfahren zur chemischen Abbildung einer Probe, umfassend die folgenden Schritte:
(a) das Erzielen eines Bildes (202) einer Probe (108);
(b) das Auswählen eines Bereichs (204) auf dem genannten Bild zur Analyse;
(c) das Positionieren (206) einer Sonde (106) über dem genannten Bereich, welcher im Schritt (b) ausgewählt worden ist;
(d) das Auswählen eines Heizmodus (208) der genannten Sonde;
(e) das Positionieren (210) eines Kapillarröhrchens (112) in der Nähe zu einer Spitze der genannten Sonde;
(f) das Starten (212) des genannten Heizmodus;
(g) das Einsammeln von Material (214), welches von der genannten Probe in Reaktion auf den genannten Heizmodus, der in dem Schritt (f) gestartet wurde, entweicht; und
(h) das Analysieren (216) der chemischen Natur des genanten Materials, welches in dem Schritt (g) entwichen ist.

23. Ein Verfahren gemäß Anspruch 22 und ferner umfassend den folgenden Schritt: (i) das Ausführen einer Nachbehandlung (218) auf dem genannten Bereich, welcher in dem Schritt (b) ausgewählt worden ist.

24. Ein Verfahren gemäß Anspruch 22 oder 23, wobei Schritt (a) das Erzielen eines thermischen Bildes der Probe oder eines topographischen Bildes der Probe umfasst.

25. Ein Verfahren gemäß einem der Ansprüche 22, 23 oder 24, wobei der Schritt (c) das Positionieren der Sonde in Kontakt mit dem ausgewählten Bereich der Probe und das Aufbringen einer bekannten Kraft, um den Kontakt mit der Oberfläche der Probe zu halten, umfasst.

26. Ein Verfahren gemäß einem der Ansprüche 22 bis 25, wobei der Schritt (e) das Erzeugen eines Kapazitätssignals zwischen der Sonde und dem Kapillarröhrchen umfasst, und das Verwenden des Kapazitätssignals, um das Kapazitätsröhrchen nahe zu der Sonde zu bringen.

27. Ein Verfahren gemäß Anspruch 22, wobei das Bild ein Bild einer Oberfläche der Probe ist, welches durch Verwenden eines thermischen Rastermikroskops (104) erzielt wurde, welches die Sonde (106), die eine thermische Sonde ist, aufweist, und wobei das Verfahren ferner umfasst:
das Auswählen einer Position auf dem Bild zur chemischen Analyse;
das Berechnen eines Satzes von Sondenpositionssteuerungsbefehlen aus der ausgewählten Position;
das Positionieren der thermischen Sonde etwas oberhalb der Oberfläche der Probe an der ausgewählten Position, wobei die Sondenpositionssteuerungsbefehle verwendet werden;
das Erhitzen der Sonde gemäß dem genannten ausgewählten Heizmodus, wobei die Heizmodi, welche zur Auswahl verfügbar sind, einen Temperaturrampenmodus, einen Heizimpulsmodus und einen Übertragungsmodus umfassen;
das Austreiben von Gasen aus der Oberfläche der Probe;
das Einfangen der Gase in dem Kapillarröhrchen, und
das Analysieren der Gase in einem chemischen Analysator.

28. Ein Verfahren gemäß Anspruch 27 und das Widerholen der Schritte, um die chemische Zusammensetzung der Oberfläche der Probe als eine Funktion der Tiefe zu analysieren.

29. Ein Verfahren gemäß Anspruch 27 oder 28 und ferner umfassend:
das Einfangen der Gase in einer Kühlfalle;
das Erhitzen der Kühlfalle, um die Gase aus der Kühlfalle freizugeben; und
dann das Analysieren der freigegebenen Gase in dem chemischen Analysator.

30. Ein Verfahren gemäß Anspruch 27 oder 28 und ferner umfassend:
das Einfangen der Gase in einem Adsorbat;
das schnelle Aufheizen des Adsorbats, um die Gase zu desorbieren, und
das Analysieren der desorbierten Gase in dem chemischen Analysator.

31. Ein Verfahren gemäß einem der Ansprüche 27 bis 30, wobei die thermische Sonde derart positioniert wird, dass sie sich auf einem vorbestimmten Abstand, vorzugsweise näherungsweise ein Mikrometer, oberhalb der Probe befindet.

32. Ein Verfahren gemäß einem der Ansprüche 27 bis 31, wobei der chemische Analysator ein Gaschromatograph (115) ist oder einen solchen umfasst.

33. Ein Verfahren gemäß Anspruch 32, wobei die Gase ferner in einem Massenspektrometer (116) analysiert werden, nachdem die Gase in dem Gaschromatographen (115) analysiert worden sind.

34. Ein Verfahren gemäß einem der Ansprüche 27 bis 33, wobei der ausgewählte Heizmodus ein Rampenmodus ist, und das adsorbierte Material ausgetrieben wird.

35. Ein Verfahren gemäß einem der Ansprüche 27 bis 34, wobei der ausgewählte Heizmodus der Heizimpulsmodus ist, und die Sonde an die Oberfläche der Probe angetippt wird.

36. Ein Verfahren gemäß Anspruch 35, wobei das Antippen der Sonde auf der Oberfläche der Probe entsprechend einem Abtastmuster erfolgt.

37. Ein Verfahren gemäß einem der Ansprüche 33 bis 36 und ferner umfassend das Erzeugen von Gasen durch Zersetzen der Oberfläche der Probe unter der Sonde.

38. Ein Verfahren gemäß einem der Ansprüche 22 bis 37 und ferner umfassend das Reinigen der Sonde (106) durch schnelles Aufheizen und das Ermöglichen, dass sich die Sonde abkühlt, bevor die Sonde positioniert wird.

39. Ein Verfahren gemäß Anspruch 38, wenn dieser an Anspruch 25 angehängt wird, und ferner umfassend das Eintauchen der Spitze der Sonde (106) in einen Klebstoff, nachdem die Sonde gereinigt worden ist und vor dem Positionieren oder Anordnen der Sonde, so dass, wenn die Sonde auf der Probe positioniert wird, Oberflächenmaterial an dem Klebstoff festklebt.

40. Ein Verfahren gemäß Anspruch 22 und ferner umfassend
das Eintauchen der Sonde (106) in einen Klebstoff;
das Positionieren der Sonde (106) in Kontakt mit der Oberfläche der Probe (108), so dass das Oberflächenmaterial an dem Klebstoff auf der Sonde anklebt;
das Anheben der Sonde und das Bewegen der Sonde zu einer anderen Position;
das Eintauchen der Sonde in ein Übertragungsmedium;
das Auflösen des Oberflächenmaterials in einen kleinen Punkt.

41. Ein Verfahren gemäß Anspruch 40, wobei das Übertragungsmedium eine reaktive Spezie beinhaltet, welche mit dem Oberflächenmaterial reagiert, um ein Reaktivprodukt zu bilden.

## Revendications

1. Système d'imagerie chimique submicronique d'un échantillon, le système comprenant :
un ordinateur (102) ;
un microscope (104) thermique à balayage couplé à l'ordinateur et ayant une platine (110) porte-échantillon pour y recevoir un échantillon (108) ;
une sonde (106) qui peut être utilisée pour chauffer l'échantillon ;
une opération (118) de réglage de la sonde qui peut être exécutée sur l'ordinateur pour faire que la sonde chauffe une zone de l'échantillon suivant un mode de chauffage ;
un analyseur (115, 116) chimique ;
un tube (112) capillaire mis en position à proximité d'une pointe de la sonde pour recueillir des gaz qui se dégagent du fait que la sonde chauffe l'échantillon ; et
des moyens pour obtenir et afficher une image (202) de l'échantillon (108), l'opération (118) de réglage de la sonde étant conçue pour régler la position de la sonde (106) par rapport à l'échantillon (108), de façon que la pointe de la sonde puisse être mise en contact avec une position sur l'échantillon correspondant à un point précis sur l'image de l'échantillon.

2. Système suivant la revendication 1, dans lequel l'opération de réglage de l'échantillon comprend :
une opération (120) de réglage de la position de la sonde pour mettre la sonde (106) en position à proximité du tube (112) capillaire et/ou de l'échantillon (108) et
une opération (122) de réglage du chauffage pour régler le chauffage de la sonde.

3. Système suivant la revendication 2, dans lequel l'opération de réglage de la position de la sonde utilise un premier seuil pour déterminer lorsque la sonde est trop loin du tube capillaire et un deuxième seuil pour déterminer lorsque la sonde est trop près du tube capillaire.

4. Système suivant la revendication 3, dans lequel les premier et deuxième seuils comprennent des valeurs de capacité et des valeurs de température.

5. Système suivant la revendication 2 et comprenant en outre des moyens pour mettre en position avec précision le tube (112) capillaire par rapport à la sonde (106).

6. Système suivant la revendication 5, dans lequel les moyens de mise en position avec précision du tube (112) capillaire par rapport à la sonde (106) comprennent des moyens pour produire un signal de capacité représentatif de la position du tube capillaire par rapport à la sonde.

7. Système suivant la revendication 5, dans lequel les moyens pour mettre en position avec précision le tube capillaire par rapport à la sonde comprennent un capteur (136) de température incorporé dans le tube capillaire, et la position relative du tube capillaire par rapport à la sonde est estimée sur la base de la température mesurée par le capteur de température qui est incorporé.

8. Système suivant la revendication 2, dans lequel l'opération de mise en position de la sonde utilise une opération d'étalonnage pour étalonner la sonde (106) dans des plans x, y et z, de façon à ce que la sonde puisse être placée en un emplacement déterminé avec précision.

9. Système suivant l'une quelconque des revendications 1 à 8, dans lequel l'analyseur chimique comprend un chromatographe (115) en phase gazeuse et un spectromètre (116) de masse, le chromatographe (115) en phase gazeuse étant disposé entre le tube (112) capillaire et le spectromètre (116) de masse.

10. Système suivant l'une quelconque des revendications 1 à 8, dans lequel l'analyseur chimique comprend au moins un spectromètre (116) de masse ou un chromatographe (115) en phase gazeuse.

11. Système suivant l'une quelconque des revendications 1 à 10, dans lequel le tube (112) capillaire est chauffé.

12. Système suivant l'une quelconque des revendications 1 à 11, dans lequel la sonde (106) est une sonde thermique à résistance.

13. Système suivant la revendication 1, dans lequel la sonde (106) fait partie du microscope (104) thermique à balayage et la sonde a une pointe résistante ;
l'opération de réglage de la sonde exécutée sur l'ordinateur (102) règle la position de la sonde et la température de la pointe résistante et le système comprend en outre
des moyens de sélection d'une zone d'une surface de l'échantillon (108) à analyser ;
des moyens de mise en position de la sonde (106) sur la zone sélectionnée de la surface de l'échantillon ;
des moyens pour mettre la sonde (106) en contact avec la surface de l'échantillon et
des moyens de chauffage de la pointe résistante de la sonde (106) suivant un programme de température sélectionné pour faire que des gaz se dégagent de la surface de l'échantillon.

14. Système suivant la revendication 13, dans lequel l'analyseur chimique est en communication de fluide avec le tube capillaire pour analyser la composition chimique des gaz dégagés.

15. Système suivant l'une quelconque des revendications 1 à 14, dans lequel l'opération de réglage de la sonde ou l'opération de réglage de la position de la sonde exécutées sur l'ordinateur (102) servent à faire en sorte que la sonde (106) balaye la surface de l'échantillon et à faire en sorte que la sonde soit mise en contact avec la surface de l'échantillon suivant une configuration tramée programmée.

16. Système suivant la revendication 15 et comprenant en outre des moyens pour maintenir la sonde (106) en contact avec l'échantillon (108) en appliquant une force connue à la sonde (106).

17. Système suivant l'une quelconque des revendications 1 à 15, dans lequel l'opération de réglage de la sonde ou l'opération de réglage de la position de la sonde règlent la température de la pointe de la sonde à une température supérieure à la température de désorption de l'échantillon et/ou à une température supérieure à la température de décomposition de l'échantillon.

18. Système suivant la revendication 17, dans lequel la température de la sonde (106) est réglée suivant un programme, de sorte qu'avant que la sonde soit mise en contact avec l'échantillon, la température de la sonde (106) est portée à une température suffisamment haute pour nettoyer la sonde ;
lorsque la sonde (106) est en contact avec l'échantillon (108), l'échantillon est maintenu à une température telle que la matière est adsorbée de la surface de l'échantillon sur la sonde ; et après que la sonde n'est plus en contact avec l'échantillon, la température de la sonde est élevée, de façon à ce que la matière de la surface de l'échantillon soit désorbée de la sonde, de sorte que le tube (112) capillaire recueille de la matière qui est désorbée de la sonde.

19. Système suivant la revendication 18 et comprenant en outre une matière appliquée en tant que revêtement à la sonde pour y faciliter l'adhérence provenant de la surface de l'échantillon.

20. Système suivant l'une quelconque des revendications précédentes et comprenant en outre un dispositif (126) de pointage pour identifier le point précis sur l'image de l'échantillon.

21. Système suivant la revendication 20, dans lequel l'image (202) est une image thermique ou une image topographique.

22. Procédé d'imagerie chimique d'un échantillon, comprenant les stades dans lesquels :
(a) on obtient une image (202) d'un échantillon (108) ;
(b) on sélectionne une zone (204) de l'image pour une analyse ;
(c) on met (206) une sonde (106) en position sur la zone sélectionnée au stade (b) ;
(d) on sélectionne un mode (208) de chauffage de la sonde ;
(e) on met (210) un tube (112) capillaire en position à proximité d'une pointe de la sonde ;
(f) on lance (212) le mode de chauffage ;
(g) on recueille de la matière (214) qui se dégage de l'échantillon en réponse au mode de chauffage lancé au stade (f) ; et
(h) on analyse (216) la nature chimique de la matière qui se dégage au stade (g).

23. Procédé suivant la revendication 22 et comprenant en outre le stade (i) dans lequel on effectue un post-traitement (218) sur la zone sélectionnée au stade (b).

24. Procédé suivant la revendication 22 ou 23, dans lequel le stade (a) comprend l'obtention d'une image thermique de l'échantillon ou d'une image topographique de l'échantillon.

25. Procédé suivant l'une quelconque des revendications 22, 23 ou 24, dans lequel le stade (c) comprend la mise de la sonde en contact avec la zone sélectionnée de l'échantillon et l'application d'une force connue pour maintenir un contact avec la surface de l'échantillon.

26. Procédé suivant l'une quelconque des revendications 22 à 25, dans lequel le stade (e) comprend la production d'un signal de capacité entre la sonde et le tube capillaire et l'utilisation du signal de capacité pour mettre le tube capillaire à proximité de la sonde.

27. Procédé suivant la revendication 22, dans lequel l'image est une image d'une surface de l'échantillon obtenue en utilisant un microscope (104) thermique à balayage ayant la sonde (106) qui est une sonde thermique et le procédé comprend en outre
la sélection d'un emplacement sur l'image pour une analyse chimique ;
le calcul d'un jeu d'instructions de réglage de la position de l'échantillon à partir de l'emplacement sélectionné ;
la mise de la sonde thermique en position légèrement au-dessus de la surface de l'échantillon à l'emplacement sélectionné, en utilisant les instructions de réglage de la position de la sonde ;
le chauffage de la sonde suivant le mode de chauffage sélectionné, les modes de chauffage qui peuvent être sélectionnés comprenant un mode à rampe de température, un mode de chauffage pulsé et un mode de transfert ;
le dégagement de gaz de la surface de l'échantillon ;
la capture des gaz dans le tube capillaire et
l'analyse des gaz dans un analyseur chimique.

28. Procédé suivant la revendication 27 et répétant les stades pour analyser la composition chimique de la surface de l'échantillon en fonction de la profondeur.

29. Procédé suivant la revendication 27 ou 28 et comprenant en outre
le piégeage des gaz dans un piège cryogénique ;
le chauffage du piège cryogénique pour libérer les gaz du piège cryogénique ; puis l'analyse des gaz libérés dans l'analyseur chimique.

30. Procédé suivant la revendication 27 ou 28 et comprenant en outre
le piégeage des gaz dans un adsorbat ;
le chauffage flash de l'adsorbat pour désorber les gaz et
l'analyse des gaz désorbés dans l'analyseur chimique.

31. Procédé suivant l'une quelconque des revendications 27 à 30, dans lequel la sonde thermique est mise en position à une distance déterminée à l'avance, de préférence d'environ un micron, au-dessus de l'échantillon.

32. Procédé suivant l'une quelconque des revendications 27 à 31, dans lequel l'analyseur chimique est ou inclut un chromatographe (115) en phase gazeuse.

33. Procédé suivant la revendication 32, dans lequel les gaz sont en outre analysés dans un spectromètre (116) de masse après que les gaz ont été analysés dans le chromatographe (115) en phase gazeuse.

34. Procédé suivant l'une quelconque des revendications 27 à 33, dans lequel le mode de chauffage sélectionné est un mode à rampe et de la matière adsorbée est extraite.

35. Procédé suivant l'une quelconque des revendications 27 à 34, dans lequel le mode de chauffage sélectionné est le mode de chauffage pulsé et la sonde est convergente et mise sur la surface de l'échantillon.

36. Procédé suivant la revendication 35, dans lequel la mise de la sonde sur la surface de l'échantillon s'effectue suivant une configuration tramée.

37. Procédé suivant l'une quelconque des revendications 33 à 36 et comprenant en outre la production de gaz en décomposant la surface de l'échantillon sous la sonde.

38. Procédé suivant l'une quelconque des revendications 22 à 37 et comprenant en outre le nettoyage de la sonde (106) par chauffage flash et le fait de laisser la sonde se refroidir avant de mettre la sonde en position.

39. Procédé suivant la revendication 38 lorsqu'elle dépend de la revendication 25 et comprenant en outre l'immersion de la pointe de la sonde (106) dans un adhésif après que la sonde a été nettoyée et avant de la mettre en position ou de la placer de façon à ce que, lorsque la sonde est placée sur l'échantillon, de la matière de la surface adhère à l'adhésif.

40. Procédé suivant la revendication 22 et comprenant en outre
l'immersion de la sonde (106) dans un adhésif ;
la mise de la sonde (106) en contact avec la surface de l'échantillon (108), de façon à ce que la matière de la surface adhère à l'adhésif sur la sonde ;
le soulèvement de la sonde et le déplacement de la sonde vers un emplacement différent ;
l'immersion de la sonde dans un milieu de transfert ;
la dissolution de la matière de surface en un petit point.

41. Procédé suivant la revendication 40, dans lequel le milieu de transfert contient une espèce réactive qui réagit sur la matière de surface pour former un produit réactif.
